# EUROPEAN PATENT SPECIFICATION

(11) **EP 4 515 202 B1**
(45) Date of publication and mention of the grant of the patent: **25.02.2026**
(21) Application number: 23721692.4
(22) Date of filing: 24.04.2023
(51) Int. Cl.: G01N 1/31, G01N 35/00, G01N 35/04, G01N 1/32, G01N 1/28

(54) **SAMPLE PREPARATION SYSTEM FOR OPTICAL IDENTIFICATION OF PREPARATION DISCS**
PROBENVORBEREITUNGSSYSTEM ZUR OPTISCHEN IDENTIFIZIERUNG VON VORBEREITUNGSPLATTEN
SYSTÈME DE PRÉPARATION D'ÉCHANTILLON POUR IDENTIFICATION OPTIQUE DE DISQUES DE PRÉPARATION

(30) Priority: 26.04.2022 DK PA202270219
(43) Date of publication of application: 05.03.2025
(73) Proprietor: Struers ApS, 2750 Ballerup (DK)
(72) Inventor: GENTER, Christian, 2750 Ballerup (DK)
(74) Representative: Zacco Denmark A/S
(86) International application number: PCT/EP2023/060588
(87) International publication number: WO 2023/208810

(56) References cited:
- US-A- 5 800 254
- US-A1- 2001 041 650
- US-A1- 2010 099 342
- US-B1- 6 994 609

## Description

The invention relates to a sample preparation system comprising a surface selection module for identifying one or more preparation discs for a mechanical processing unit, wherein the module employs optical identification of the preparation surface.

The invention further relates to a method of identifying one or more preparation discs based on optical identification.

### BACKGROUND

Materialography generally refers to the investigative process of examining the microstructure of any solid material and provide a qualitative and/or quantitative description of the properties thereof. Materialographic sample preparation generally involves processes of preparing a material sample prior to examination and analysis of the prepared sample. Materialographic sample preparation generally seeks to reveal a sufficient representation of the true properties of the sample, whether it is metal, ceramic, sintered carbide, minerals, polymers or any other solid material. Abrasive means are typically used to grind and polish a surface of the sample as a part of the preparation process to expose an approximate true representation of the structure of the sample.

Abrasive means include preparation surfaces, such as abrasive discs, with a functional surface providing grinding/polishing upon contact with the sample and upon movement relative to the sample surface. The choice of the type of preparation surfaces depends on the choice of sample material they are to be used on. Soft, hard, ductile, brittle, homogenous, heterogeneous, etc., materials may typically need to be treated a different way to obtain a satisfactory result. Furthermore, the sample may need to undergo several abrasive steps, typically accomplished in successive stages steadily reducing the aggressive nature of the abrasive means by involving different preparation surfaces.

For proper preparation, and further for increased reproducibility, the sequence of abrasive steps needs to be based on a systematic approach and preferably precisely controlled.

US 6 994 609 B1 relates generally to semiconductor fabrication and, more specifically, to performing multiple wafer processing operations in a single wafer processing module using replaceable pad assemblies.

### BRIEF DESCRIPTION OF THE INVENTION

It is an object of the present invention to provide a sample preparation system comprising a surface selection module providing an improved identification of preparation disc comprising preparation surfaces and which potentially allows a more efficient and precise selection of preparation surfaces to be applied in a materialographic abrasive process step. Moreover, it is an object to provide identification means, which has a minimized impact on the functionality of the preparation surface.

It is a further object to provide a sample preparation system for such identifications, which is simple and compact, and which may potentially be readily modified to suit the environment in which it is to be installed.

Thus, the present invention relates to a sample preparation system comprising a surface selection module for identifying one or more preparation discs having a preparation surface for materialographic sample preparation, the surface selection module comprises a support system having three or more shelves, such as five or more shelves, each arranged to support a preparation disc having a preparation surface, for each shelf, the surface selection module comprises a reflecting surface arranged to direct electromagnetic waves reflected from a characteristic identification mark of the preparation disc to a sensing position located external to the support system, the surface selection module further comprises an optical sensor arranged to sense the characteristic identification mark in the sensing position and to provide an identification output accordingly, the sample preparation system further comprises a mechanical processing unit comprising a support arrangement with a plane support surface on which the preparation discs may be held in place during sample preparation by means of a fixation arrangement, a transfer unit for transferring a preparation disc having a preparation surface from the support system to the plane support surface of the mechanical processing unit, and a control unit arranged to control the transfer unit in response to the identification output.

By the present invention it is possible to identify the type of preparation discs and their location in a support system. The present invention provides the advantage of introducing increased efficiency in a materialographic sample preparation process, as the identification, and in turn the selection and implementation, of individual preparation discs becomes more time-efficient and/or less error prone. By the invention, the preparation discs do not need to be placed on pre-allocated shelves, but may be placed on any shelf and identified by the system. This reduces the risk of erroneously selection of preparation discs and may further allow for a more automated process.

As the system provides a sensing position external to the support system, e.g. external to spaces between shelves, the support system does not need to accommodate for the optical sensor, allowing for a more compact and space-saving support system. The reflecting surface can be used to determine and modify the location of the sensing position and thereby provide an optical path suitable for the space in which the surface selection module is to be located. This further enables the optional use of a single optical sensor for identifying several individual preparation surfaces separated into different shelves. The invention may provide a more compact and simple solution for providing a less restricted, more flexible setup for the detection of the characteristic identification mark.

The preparation disc may preferably be a consumable suitable for mechanical processing a sample, wherein the mechanical processing may be a part of a materialographic preparation process. Generally, materialography is thought of as an investigative method of materials science, encompassing the optical examination of microstructures, and its goal is a qualitative and/or quantitative description of the microstructure. A purpose of applying the preparation disc may preferably be to prepare the sample, so that it is suitable for such microstructure analysis.

Generally, the basic process of mechanical sample preparation is material removal, using abrasive particles in successively finer steps to remove material from the surface until the required or acceptable result is achieved. The successively finer steps are usually provided by successive application of different preparation discs. The preparation process used should create a small number of artefacts, making it possible, in practice, to analyse a microstructure of the sample in a satisfactory way. The preparation goals are generally that the structural elements of the samples are to be retained, the sample surface should generally be clean, plane, highly reflective and without scratches. To obtain these goals mechanism such as grinding and polishing is used.

In one or more embodiments, the preparation disc may preferably be plate-shaped, such as grinding sheet or polishing cloth. The preparation disc may comprise two opposing major surfaces, one being the preparation surface. The preparation surface may comprise grinding and/or polishing means, such as fixed abrasive particles e.g. diamond particles or silicon carbide. Such preparation disc may for example be a grinding disc. Alternatively or additionally, the preparation surface may provide a surface to be directed towards the sample upon mechanical processing with an abrasive provided between the sample and the preparation surface, such as a diamond suspension. Such preparation disc may be a polishing cloth.

In one or more embodiments, types of preparation discs may be characterised by their application area, which they are designed for, e.g. the application area may be defined by the sample, such as material and/or hardness of the sample and/or by the step within an abrasive sequence of the preparation process. The preparation surface types may differ in material, hardness, resilience, grain size, grain pattern and/or grain type etc.

The control unit may preferably be arranged to be able to distinguish between preparation discs of different preparation disc types from the identification output.

Advantageously, the identification output provided by the optical sensor based on a reading of the characteristic identification mark allows for distinguishing between available preparation discs and thereby allow for correct selection of the right type of preparation disc for the selected purpose.

In one or more embodiments, the control unit is arranged to identify the location of specific preparation disc types necessary for a selected preparation process based on one or more identification output. In one or more embodiments, the control unit is arranged to identify whether or not the support system contains a specific preparation disc type.

In one or more embodiments, for each detected preparation disc, the identification output contains information regarding preparation disc type and an identification of the shelf on which each detected preparation disc is located.

The control unit may also be arranged to control from which shelf the transfer unit transfers a preparation disc from, based on said identification output.

The control unit may be arranged to automatically control the transfer unit in response to the identification output(s), e.g. so that the transfer unit is controlled to perform a selection operation from the support system and transferring the selected preparation disc to a mechanical processing unit. The selection operation to be performed may be based on a pre-assigned materialographic preparation process and/or input from the user to the control unit, e.g. prior to sensing of preparation discs by the optical sensor.

The sample preparation system may thereby enable or provide an automatic loading and unloading of preparation discs e.g. in an out of a mechanical processing unit mechanical processing unit for materialographic sample preparation. Manual loading has the disadvantage that the preparation discs can be inserted incorrectly into the machines at which they are to be used. This can damage the mechanical processing unit, the sample to be prepared and/or the preparation disc itself.

In one or more embodiments, the transfer unit is arranged for transferring a preparation disc having a preparation surface from the support system to the plane support surface of the mechanical processing unit.

In one or more embodiments, the transfer unit may comprise any suitable means for displacing a preparation disc to and from a shelf of the support system. The transfer unit may for example comprise robotic means. Furthermore, it is preferable that the transfer unit is configured to place the preparation disc in a mechanical processing unit, such as on a support arrangement comprising a plane support surface.

In one or more embodiments, the control unit is arranged to convert the identification output to an ID signal, which may be communicated to the transfer unit and used as a control signal.

Alternatively or additionally, the control unit may comprise means for communicating the ID signal to the user of the sample preparation system e.g. by displaying the ID signal on display means and/or to a data storage storing the ID signal. The control unit may preferably be arranged to provide an ID signal based on the identification output, which contains information on the identified preparation disc type and their associated assigned shelf.

In one or more embodiments, the control unit may be arranged to provide an ID signal to the user of the sample preparation system based on the identification output, such as shelf number(s) and associated preparation disc type(s). The control unit may be arranged to signal whether or not the needed preparation disc is contained by the support system to the user.

In one or more embodiments, the control unit is arranged to determine an incorrect positioning of the preparation disc on a shelf and/or a missing preparation disc on a shelf, based on the identification output. This may be provided based on a partial and/or missing identification reading by the optical sensor. The control unit may further provide a signal to the user of the sample preparation system, e.g. via display means, indicating that a preparation disc is incorrectly placed or missing on a shelf. For example, the ID signal may contain an indication of whether the shelf holds the correct preparation disc or not, and/or may be provided as a worded or visual signal, e.g. provided by display means.

Alternatively or additionally, the control unit may be arranged to store the ID signal in a data storage, which may be provided as a look-up table when selecting preparation disc(s). The look-up table may be updated based on received identification outputs, e.g. with shelf number and associated preparation disc type.

In one or more embodiments, the surface selection module may be arranged to collect data associated with the preparation disc, such as tracking of the age and/or use-time of the preparation disc, which may be used to provide an indication of whether or not the preparation disc needs to be discarded and/or replaced. This indication may be communicated to the user by the control unit and display means.

In one or more embodiments, the preparation discs are held by the support system such the characteristic identification mark is optically exposed so that it may be optically sensed. The shelves may hold the preparation discs by a frame, arms or using any appropriate technique (e.g., suction, clamps, electromagnetic holders, etc.). In one or more embodiments, the shelves are arranged to support the preparation disc at the edge of the preparation disc, preferably by contact with the back surface thereof.

In one or more embodiments, the support system can provide storage of the preparation discs between uses and/or the support system may be a part of a mechanical processing unit, i.e. polishing and/or grinding machine.

In one or more embodiments, the support system comprise position means for correct positioning of the preparation surface in order to enable the detection and identification thereof by the optical sensor. This may for example be provided by a shelf space shape fitted to the preparation disc shape, e.g. the outer peripheral shape (width/diameter) thereof etc. In one or more embodiments, each shelf may be arranged to support a single preparation disc to be identified.

In one or more embodiments, the support system is arranged to store a plurality of preparation discs, so that at least two of the plurality of preparation discs are of different types, e.g. comprised of different materials of the preparation surface thereof.

The support system may comprise a plurality of shelves arranged in a stacked configuration.

The shelves may be arranged in a column, above one another. Since the optical sensor is arranged externally to the shelves, each shelf may be placed close to one another.

Furthermore, the shelves may preferably be arranged so that when each shelf contains a preparation disc, the distance between neighbouring preparation discs is less than 85 mm, such as less than 75 mm, or such as less than 65 mm.

Advantageously, this provides for a more compact solution, allowing for an optimised amount of preparation surfaces to be held by the storage system.

In one or more embodiments, the electromagnetic waves are reflected from the characteristic identification mark, and the reflecting surface provide a pathway for electromagnetic waves extending from the characteristic identification mark to the optical sensor, so that the optical sensor can capture the electromagnetic waves travelling along the pathway. In one or more embodiments, the pathway is a free-space pathway.

The reflecting surface may be any surface, which reflect electromagnetic waves, in particular of wavelengths within the IR or visible range. The reflecting surface has reflective properties suitable for adequate detection of the characteristic identification mark for identification purposes. In one or more embodiments, for each shelf, a plurality of reflecting surfaces may be provided.

In one or more embodiments, the sensing position is a position for the optical sensor in which it is able to detect the characterising identification mark. The sensing position may be the interception between the optical path from the characteristic identification mark reflected by the reflection surface and the optical sensor. The optical path and/or the optical sensor may be movable, e.g. by a displacement system (which is described further below), whereby a single optical sensor may be arranged to be positioned in several sensing positions. E.g. the optical sensor may be displaceable along a path, on which numerous sensing position are defined. Alternatively, the sensing position may be a position occupied by an optical sensor in a fixed position. In one or more embodiments, a single sensing position may be provided for each shelf.

In one or more embodiments, the characteristic identification mark is different for different preparation disc types. The optical sensor is preferably arranged to capture the difference in the different characteristic identification marks. Accordingly, the optical sensor is preferably arranged to provide a distinct identification output for each individual preparation disc type.

In one or more embodiments, the characteristic identification mark is a surface identification mark. The characteristic identification mark may be a code, e.g. expressed by an image, a pattern, colour(s) or letter(s) or any combination thereof.

The characteristic identification mark may preferably be an image provided at a surface of the preparation disc, such as 2-dimensional code.

Advantageously, such image may be sufficient for the identification purposes of the present invention and further allows for maintaining a substantially uniform thickness of the preparation surface.

In one or more embodiments, the characteristic identification mark is a data matrix (DM) code, a quick response (QR) code, a barcode or the like. The data matrix code may be according to international standard ISO/IEC 16022. The QR code may be according to international standard ISO/IEC 18004. The barcode may be according to international standard ISO/IEC 15415 or ISO/IEC 15416.

In one or more embodiments, the image may be extending parallel to a major extent of the preparation disc, e.g. a back or front major surface of the preparation disc.

The characteristic identification mark protrudes for preferred preparation discs less than 0.2 mm, such as less than 0.1 mm from a surface of the preparation disc at which the characteristic identification mark is provided.

Strict geometric requirement on the preparation discs may be necessary in order to ensure smooth operation and a grinding/polishing result of high precision and quality. The planeness of the preparation disc may in turn provide a very flat processing result of the sample surface, which may allow for reduced preparation time. Preferably, the presence of the characteristic identification mark has no or very little effect on the uniformity in the thickness of the preparation disc.

In one or more embodiments, the characteristic identification mark protrudes less than 0.18 mm, such as less than 0.15 mm, such as less than 0.12 mm such as less than 0.09 mm or such as less than 0.07 mm from the surface of the preparation disc at which the mark is provided.

Advantageously, such small protrusions may have an insignificant effect on the functionality and quality of the preparation disc in regards to its grinding/polishing effect.

In one or more embodiments, the characteristic identification mark protrudes less than 0.05 mm, such as less than 0.04 mm, such as less than 0.03 mm such as less than 0.02 mm or such as less than 0.01 mm from the surface of the preparation disc at which the mark is provided.

Advantageously, such small protrusions may have a very insignificant effect or even no effect on the functionality and quality of the preparation disc in regards to its grinding/polishing effect.

In one or more embodiments, the protrusion provided by the identification mark may in general be measured perpendicular to the major surface of the disc on or in which the identification mark is located.

In one or more embodiments, the characteristic identification mark may be provided in on the preparation disc by adhesion.

In one or more embodiments, the characteristic identification mark may be etched or engraved in the surface, such as to provide letter(s) or a pattern.

The characteristic identification mark is preferably provided on a back surface of the preparation disc opposite to the preparation surface thereof.

Advantageously, this allows for the preparation surface to be less affected by the identification.

In one or more embodiments, the characteristic identification mark is provided at the preparation surface of the preparation disc, such as in or on the preparation surface. The preparation surface may generally be the front surface of the preparation disc.

In one or more embodiments, the characteristic identification mark is provided by the preparation surface. Advantageously, this eliminates the need to add an identification mark to the preparation disc, but instead properties inherent to the preparation disc may be used for identification. The characteristic identification mark may be provided by a structure, e.g. grinding or polishing pattern of the preparation surface, such as the pattern providing the abrasive structure of a preparation surface of e.g. a grinding disc. The pattern may be any pattern suitable for the preparation surface, such as a dotted hexagonal or circular pattern or other.

In one or more embodiments, the optical sensor is configured to detect any of the above types of identification marks, e.g. codes or patterns, and provide an identification output accordingly. E.g. the optical sensor may be provided by a colour sensor, a code scanner and/or a camera.

The optical sensor (5) is advantageously an image sensor.

The image sensor may e.g. be a charge-coupled device (CCD) or an active pixel (CMOS) sensor. The image sensor may be a part of an electronic imaging device, such as a camera.

In one or more embodiments, the optical sensor is configured to detect infra-red, such as near infra-red, and/or visible wavelengths.

The sample preparation system may further comprise a light source arranged to illuminate the characteristic identification mark, when a preparation disc is supported by said support system.

The illumination may be provided by any wavelength or wavelength range, which the optical sensor, e.g. image sensor, is configured to be able to capture. **In** one or more embodiments, the characteristic identification mark is illuminated by wavelengths outside the visible spectrum, such as near infra-red wavelength. Advantageously, this allows for the illumination to be substantially invisible by the user of the sample preparation system.

**In** one or more embodiments, the mechanical processing unit comprises a support arrangement comprising a plane support surface, which may be rotatably arranged, so that a preparation disc attached thereon can provide a grinding and/or polishing function by rotation of the support surface.

The mentioned fixation arrangement may in one preferred embodiment include magnetic means in the support arrangement as well as in the preparation discs, and wherein the preparation discs are held in place on the plane support surface due to mutual magnetic attraction between the support arrangement and the preparation discs.

In one or more embodiments, the support arrangement may comprise a plane support surface having a permanent magnet designed to provide a magnetic attraction to the preparation disc, which may be provided by a ferromagnetic material, e.g. a metal backing in the back surface thereof. The plane support surface may preferably be suitable for supporting preparation disc having different preparation surfaces.

Alternatively or additionally, the fixation arrangement may include suction means arranged to provide a low pressure region in contact with the preparation disc and wherein the preparation disc is held in place on the plane support surface due to the low pressure region.

In one or more embodiments, the low pressure region is sealed from the outside of the suction area when in contact with a preparation surface, so that a low pressure region can be provided by sucking air out of the suction area. The low pressure region is generally of a lower pressure than the pressure outside the suction area, which for the present application generally would be atmospheric pressure.

Advantageously, the suction means and the magnetic means provide suitable fixation of the preparation disc relative to rotation means of the mechanical processing unit, such that a grinding/polishing process can be provided as a part of a materialographic preparation process. Additionally the suction and magnetic means may provide uniform fixation of the preparation disc allowing the preparation surface to be exposed. Furthermore, they can maintain the planeness of the preparation discs.

The reflecting surface may be attached to said support system and arranged above or below said preparation disc when the preparation disc is supported by said support system.

In one or more embodiments, the majority or each reflecting surface is arranged in a cavity comprises by a partition structure separating shelves of the support system. The partition structure may preferably be opaque. The cavity may comprise an inclined surface directed toward a sensing position. The partition structure may be arranged to optically separate reflecting surfaces associated with different shelves of the sample preparation system, e.g. so as to provide an optical shield between the reflecting surfaces. A major extent of the partition structure may be approximately equal to or larger than a major extent of the preparation disc when arranged in a neighbouring shelf and/or than a major extent of a neighbouring shelf.

The reflecting surface is preferably arranged to provide an angle of reflection of the electromagnetic waves between 40-85 degrees, such as between 50-80 degrees or such as between 60-70 degrees.

Advantageously, by a larger angle of reflection a smaller distance between neighbouring preparation discs may be provided in the support system. In one or more embodiments, the angle of reflection is measured between the surface normal and the reflected ray provided by the electromagnetic waves in a direction towards the optical sensor, wherein the surface normal is defined by a line normal to the point of incidence to the reflecting surface.

In one or more embodiments, the angle of reflection is at least 50 degrees, such as at least 60 degrees, such as at least 70 degrees, such as at least 80 degrees. In one or more embodiments, the angle of reflection is at least 55 degrees, preferably at least 60 degrees, more preferably at least 65 degrees.

The sample preparation system may comprise a displacement system arranged to provide a mutual displacement between the optical sensor and the support system.

The displacement system allows for utilizing a reduced number of optical sensors in the module, such as one, so that components for the module may be saved, making the module cheaper to produce. The displacement system may comprise any suitable means for providing the displacement, such as a robot and/or a guide rail with drive means for moving the optical sensor and/or the support system along the guide rail.

In one or more embodiments, the optical sensor is attached to the displacement system and arranged to be displaced by the displacement system between sensing portions.

In one or more embodiments, the support system is attached to the displacement system and arranged to be displaced by the displacement system between support system positions in which the optical sensor is in a sensing position.

In one or more embodiments, the sample preparation system is arranged to provide a sensing position for each shelf. E.g. the displacement system may be configured to be movable between pre-determined sensing positions and/or support system positions.

Herein is also disclosed a preparation disc for materialographic sample preparation, wherein the preparation disc comprises a first major surface comprising a preparation surface and a second major surface comprising a characteristic identification mark.

The preparation disc is preferably suitable for being identified by the surface selection module according to the first aspect of the invention. The characteristic identification mark may be configured to be identified by the sample preparation system according to the first aspect of the invention. The preparation surface may comprise any of the features associated thereto as described in relation to the first aspect of the invention. The characteristic identification mark may be of any of a type described in relation to the first aspect of the invention, such as a 2D image. In one or more embodiments, the characteristic identification mark is code, such as a DM code, QR-code, or bar-code attached on the back major surface of the preparation disc. Preferably, the identification mark protrudes less than 0.2 mm from the surface of the preparation disc at which the characteristic identification mark is provided.

The preparation disc is preferably arranged to be removably supported on a support arrangement of a mechanical processing unit. The attachment between the support arrangement and the preparation disc may be provided by any suitable fixation arrangement, such as by magnetic means.

Herein is also disclosed a sample preparation system as disclosed herein comprising a plurality of such preparation discs.

According to a further aspect of the present invention, it relates to a method of identifying one or more preparation discs for materialographic sample preparation, wherein the method comprises the steps of providing a support system having three or more shelves and one or more preparation discs, each comprising a preparation surface, wherein the preparation discs are distributed into said shelves, providing an optical sensor in a sensing position, wherein the sensing position is provided with electromagnetic waves from a characteristic identification mark of one of the preparation discs, by reflecting the electromagnetic waves using a reflecting surface, detecting the characteristic identification mark by means of the optical sensor and providing an identification output accordingly, wherein the identification output contain data on the identified preparation disc and its associated shelf, controlling a selection of a preparation disc by a transfer unit controlled by a control unit based on said identification output, and placing the selected preparation disc in a mechanical processing unit mechanical processing unit using said transfer unit.

In one or more embodiments, the method may be performed by the sample preparation system according to the present invention.

In one or more embodiments, the steps may be provided in the sequence listed above. In one or more embodiments, the steps prior to step of controlling the selection of preparation disc undertaken by the transfer unit, may be repeated until all preparation disc available have been identified, or until the preparation disc needed has been identified.

In one or more embodiments, the control of selection of preparation disc may be based on a pre-defined materialographic preparation process, which may be provided as an input by a user to the control unit. The pre-defined materialographic preparation process may involve numerous preparation disc to be placed in the processing unit in succession and applied successively to a sample.

In one or more embodiments, the method may comprise the step of selecting a materialographic preparation process, involving one or more preparation disc, and providing this selection as an input to the control unit. The selection may involve defining a materialographic preparation process or selecting a predefined process stored in a data storage of the control unit. This selection may be provided before or between any of the above listed steps, such as prior to providing the optical sensor in a sensing position (and preferably prior to the subsequent steps of the method), but preferably after providing the shelves containing the discs, or prior to controlling the transfer unit (and preferably prior to the subsequent steps of the method), but preferably after the detection of one or more characteristic identification marks.

In one or more embodiments, a transfer unit e.g. according to the first aspect of the invention, may be provided to transfer preparation discs between the support system and the mechanical processing unit.

In one or more embodiments, the mechanical processing unit may be a polishing and/or grinding machine for materialographic preparation. The processing unit may comprise a support arrangement as described according to the first aspect of the invention.

In one embodiment, the control unit according to the first aspect of the invention may be arranged to manage the selection of preparation discs and optionally further monitor the age and/or use of the preparation disc. In one or more embodiments, the control unit may be arranged to control the transfer unit and/or the mechanical processing unit mechanical processing unit based on said identification output.

### DRAWING

Aspects of the present disclosure will be described in the following with reference to the figures in which:
- Fig. 1: shows a surface selection module according to embodiments of the invention, seen from the side,
- Fig. 2: shows a part of a shelf of a support system and an optical sensor according to embodiments of the invention, seen in perspective,
- Fig. 3: shows a cross-sectional view of shelf with a preparation disc and an optical sensor according to embodiments of the invention,
- Fig. 4: shows a simplified view of the optical path, optical sensor, reflecting surface and a characteristic identification mark according to embodiments of the invention,
- Fig. 5: shows a front view of a preparation disc according to embodiments of the invention,
- Fig. 6: shows a back view of a preparation disc according to embodiments of the invention,
- Fig. 7: shows a sample preparation system with displaceable optical sensor according to embodiments of the invention, and
- Fig. 8: shows a sample preparation system with displaceable support system according to embodiments of the invention.

### DETAILED DESCRIPTION OF THE INVENTION

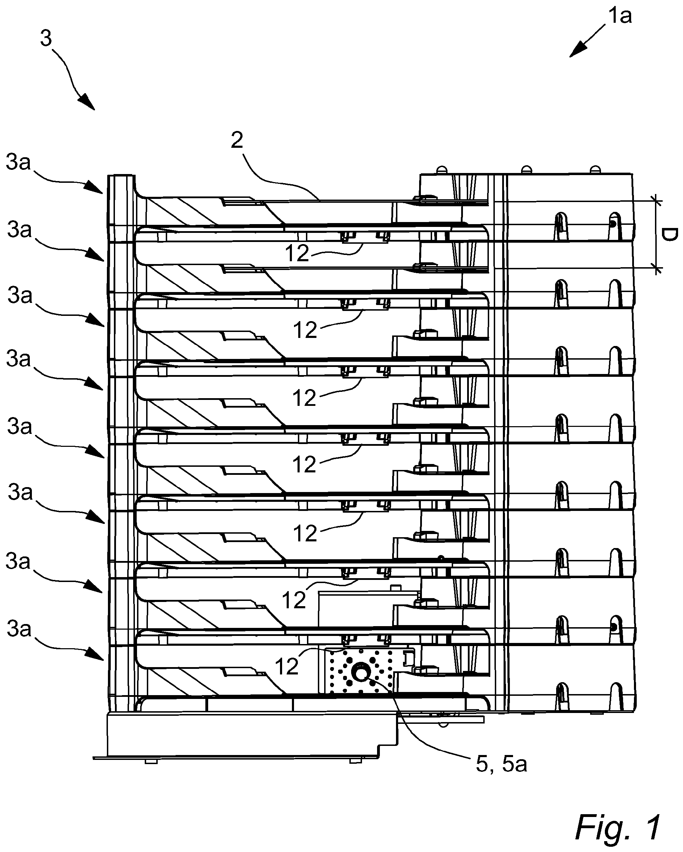

Fig. 1-8 shows a sample preparation system 1 or parts thereof according to embodiments of the invention.

Fig. 1 shows a surface selection module 1a according to embodiments of the invention, seen from the side. The side may under normal circumstances be covered with a cover, so shield the components inside the module 1a. The surface selection module 1a comprises support system 3 providing a stack of horizontally stacked shelves 3a, in which preparation disc 2 can be placed in a substantially horizontal orientation, which is by example is shown in the two uppermost shelves 3a each containing a preparation disc 2.

In one or more examples, the characteristic identification mark 6 may be a data matrix code and the optical sensor 5 may be a data matrix code scanner, such as a camera 5a, which is configured to provide an identification output based on said sensed data matrix code.

In Fig. 1, the support system 3 comprises a cavity 12 comprising a reflecting surface for each shelf 3a provided therein, such that a camera 5a comprising an optical sensor 5 can sense an underside of the preparation disc independent on which shelf 3a the disc 2 is located. In the present example, the camera 5a is arranged to be movable in a substantially vertical direction such that one camera can be used for identifying all preparation disc 2 distributed between the shelves 3a. Due to the cavities 12 and reflecting of electromagnetic waves to be sensed, i.e. the image, of the reflecting surfaces, the shelves 3a can be arranged close together allowing for a distance D, defined between neighbouring preparation disc 2 when arranged in neighbouring shelves 3a, to be lower than 70 mm, such as between 60-70 mm.

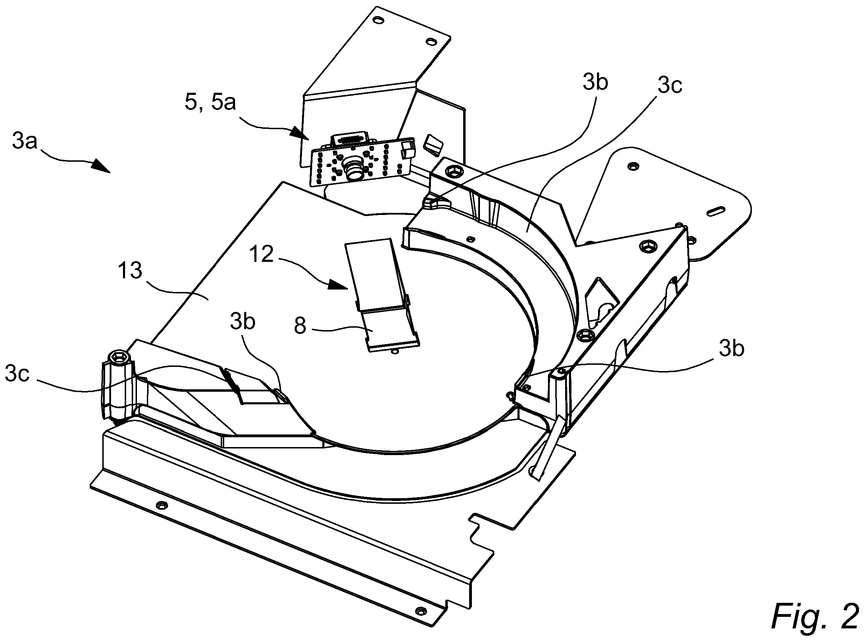

Fig. 2 shows a part of a shelf 3a of a support system 3 and an optical sensor 5 according to Fig. 1, seen in perspective. The shelf 3a comprises a partition structure 13 essentially functioning as a bottom plate of the shelf in the present example. The partition structure 13 comprises the cavity 12, which in the present example is shaped with a tapered surface between the surface of the major plane extent of the partition structure 13 towards the reflecting surface 8 located in the cavity 12. The camera 5a is arranged slightly tilted towards the cavity 12. The shelf 3a is further seen comprising support edges 3b for a preparation disc 2 to be rested on. Furthermore, the shelf 3a optionally comprises position means 3c defining an area in which the preparation disc may be placed, when placed in the shelf 3a, so that an identification can be undertaken. In the present example, the position means 3c are provided by a partial peripheral edge to be enclosing and optionally abutting part of the peripheral edge of the preparation disc.

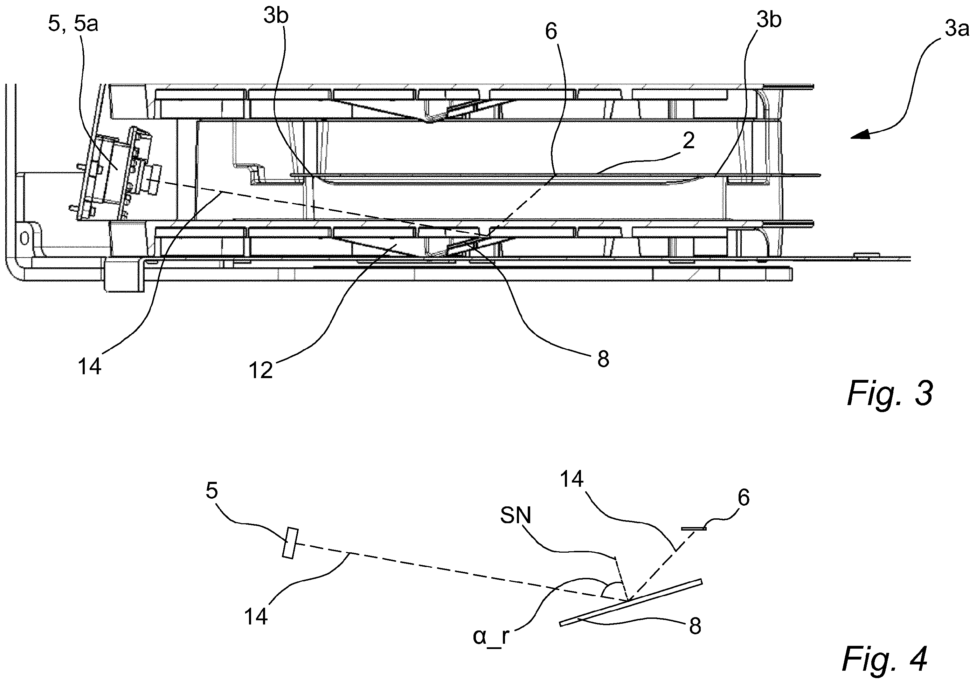

Fig. 3 shows a cross-sectional view of the shelf of Fig. 2. As seen in Fig. 3 the cavity 12 is arranged to accommodate for an optical path 14 to be established between the optical sensor 5 of the camera 5a to the characteristic identification mark 6 of a preparation disc 2, located in the shelf 3a and supported by the support edges 3b. The optical path is seen changing direction due to being reflected off the reflecting surface 8.

Fig. 4 shows a simplified view of the optical path 14, optical sensor 5, reflecting surface 8 and a characteristic identification mark 6 of the setup shown in Fig. 3. As seen in Fig. 4, it is desired to provide a relatively large angle of reflection α_r in order to provide a small vertical extent of the free-space needed for the optical path 14 to be established between the optical sensor 5 and the characteristic identification mark 6. The reflection angle α_r is defined between the surface normal SN extending perpendicular to the reflecting surface 8 at the point of incidence by the ray of electromagnetic waves in a direction from the characteristic identification mark 6 to the optical sensor 5. In the present example the reflection angle α_r is between 60-70 degrees.

In one or more examples, a light source (not shown) may be present to illuminate the identification mark 6, so that it is more easily sensed by the optical sensor 5. Such light source may be a near infra-red light source. The light source may be located adjacent or close to the optical sensor 5 and utilize the reflecting surface 8 for illuminating the characteristic identification mark 6. In one or more examples, the characteristic identification mark 6 is a passive identification mark and the electromagnetic waves detected are those reflected off the characteristic identification mark, such as providing an image thereof at the optical sensor 5.

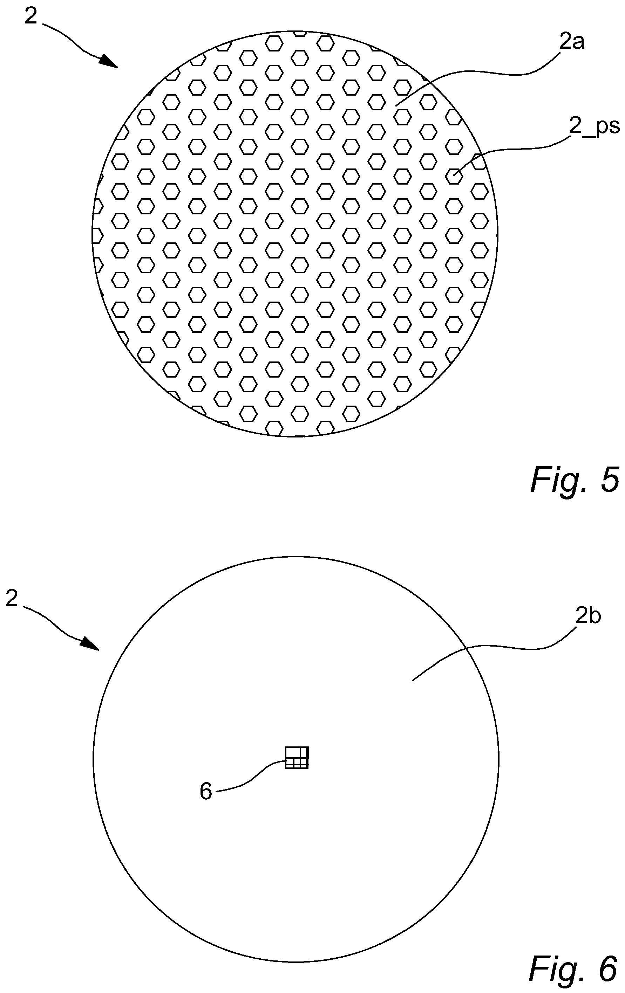

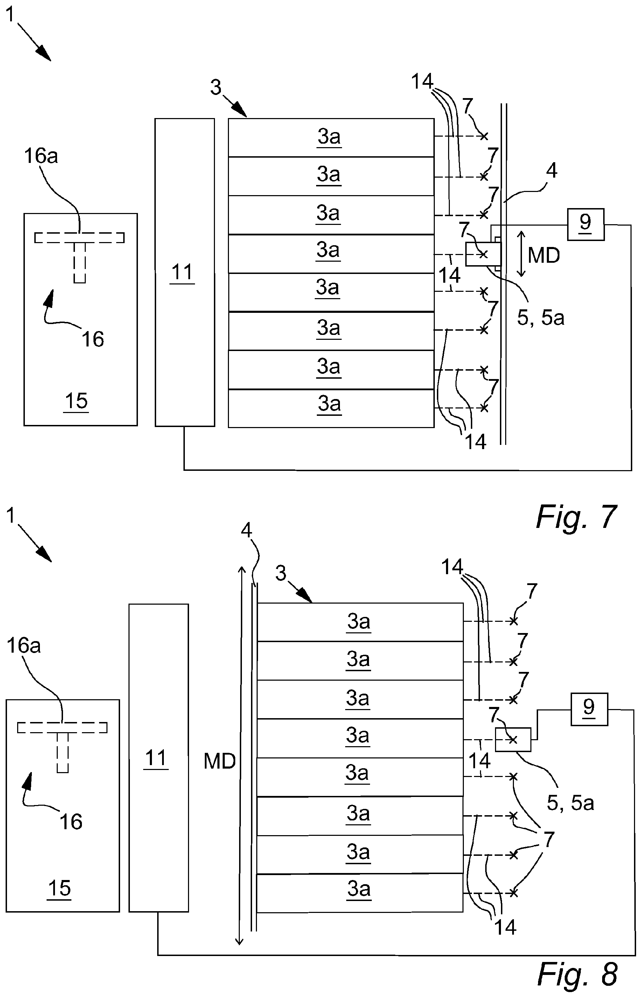

Fig. 5 and 6 shows a front view (Fig. 5) and a back view (Fig. 6) of a preparation disc 2 of the invention. The preparation disc 2 may be pate-shaped in the sense that their width and lengths (or diameter) is much larger than its thickness. The preparation disc 2 is configured to be identifiable by the sample preparation system 1 of the invention, e.g. as shown in Fig. 7 and 8. Fig. 5 shows a front surface 2a of the preparation disc 2 comprising a preparation surface 2_ps configured for preparation of a sample for materialographic examination. In the present example, the preparation surface 2_ps is designed for grinding a sample, and comprises a pattern of abrasive means for providing such grinding upon contact with the sample. Fig. 6 shows a back surface 2b of the preparation disc 2, being a major surface arranged opposite to the preparation surface 2_ps. The back surface 2b comprises a characteristic identification mark 6, preferably centred on the back surface 2b. The characteristic identification mark 6 may preferably be printed or adhered on the back surface 2b.

Optionally, the back surface 2b may be a metal surface, such as a ferromagnetic metal surface, e.g. the preparation disc 2 may be based on a flexible plate, e.g. flexible steel plate, making positioning, removal and storage more easy. Alternatively or additionally, the characteristic identification mark 6 may be repeated or located elsewhere on the preparation disc 2.

Fig. 7 and Fig. 8 shows two different embodiments of a sample preparation system 1 according to the invention. In Fig. 7, the sample preparation system 1 comprises displacement means 4 arranged to displace the optical sensor and the associated camera 5a between sensing positions 7 in a moving direction MD being preferably substantially vertical. In Fig. 8, the sample preparation system 1 comprises displacement means 4 arranged to displace the support system 3 and thereby the shelves 3a, so as to align a sensing position with an optical sensor 5 of a camera 5a. The movement direction MD of the support system 3 may be preferably substantially vertical.

In Figs. 7 and 8, the sensing positions 7 generally defines positions in which the characteristic identification mark 6 is visible to the camera 5 and can be detected by the optical sensor 5a. Any interception of the optical sensor 5 with the optical paths 14 shown may provide a sensing position.

In Figs. 7 and 8, the camera 5a is arranged to sense a characteristic identification mark off a preparation disc located on a shelf 3a and provide an identification output accordingly to a control unit 9, which in turn is arranged to control the selection of a preparation disc 2 from a shelf 3a by a transfer unit 11. The transfer unit 11 is arranged, based on a control signal from the control unit 9, to take a specific preparation disc from a specified shelf 3a and place it in a mechanical processing unit 15. The transfer unit 11 is preferably arranged to place the preparation disc on a plane support surface 16a of a support arrangement 16 of the mechanical processing unit 15.

The mechanical processing unit 15 may further be supplied with a sample, e.g. in a sample holder, and the mechanical processing unit 15 may be arranged to abrade (grind or polish) a surface of the sample may forcing the preparation surface of the preparation disc on the plane support surface 16a onto the sample surface.

The abrasive preparation may be provided by movement of the preparation surface relative to a sample surface involving rotation of the preparation surface about an axis perpendicular to a major surface of the disc, e.g. the preparation surface.

A method of identifying one or more preparation discs for materialographic sample preparation, e.g. using the system 1 according to Fig. 7 or 8, may comprise the method steps of
A. providing a support system 3 having three or more shelves and one or more preparation discs each comprising a preparation surface, wherein the preparation discs are distributed into said shelves 3a,
B. providing an optical sensor 5 in a sensing position 7, wherein the sensing position 7 is provided with electromagnetic waves e.g. a reflected image, from a characteristic identification mark of one of the preparation discs, the electromagnetic waves are reflected off a reflecting surface 8, preferably provided below the preparation disc,
C. detecting the characteristic identification mark by the optical sensor 5 and providing an identification output accordingly, wherein the identification output contain data on the identified preparation disc and its associated shelf 3a,
D. controlling a selection of a preparation disc by controlling a transfer unit 11 by a control unit 9 based on said identification output, and
E. placing the selected preparation disc in a mechanical processing unit mechanical processing unit 15 using said transfer unit 11.

The steps may be provided in the sequence listed above. The steps A-C may be repeated until all preparation disc available have been identified, or until the preparation disc needed has been identified. The method may comprise the step of selecting a pre-defined materialographic preparation process, involving one or more preparation disc, and providing this selection as an input to the control unit 9. This selection may be provided before or between any of the above listed steps A-E, such as prior to step A or B, but preferably after step A if prior to step B, or the selection may be provided prior to step D, but preferably after step C.

The step of providing a support system 3 having three or more shelves and one or more preparation discs each comprising a preparation surface, wherein the preparation discs are distributed into said shelves 3a may be provided by distributing one or more preparation discs into shelves 3a of a support system 3, preferably such that the filled shelves 3a each comprises a single preparation surface, either as a part of the method or prior to the execution of the method. The support system 3 may be arranged to provide storage for the disc, prior to, post, or between execution of the method.

### REFERENCE LIST

- 1: sample preparation system
- 1a: surface selection module
- 2: preparation disc
- 2_ps: preparation surface
- 2a: front surface
- 2b: back surface
- 3: support system
- 3a: shelf
- 3b: support edge
- 3c: position means
- 4: displacement system
- 5: optical sensor
- 5a: camera
- 6: characteristic identification mark
- 7: sensing position
- 8: reflecting surface
- 9: control unit
- 10: functional surface
- 11: transfer unit
- 12: cavity
- 13: partition structure
- 14: optical path
- 15: mechanical processing unit
- 16: support arrangement
- 16a: plane support surface

- α_r: angle of reflection
- D: distance between neighbouring preparation discs
- MD: movement direction
- SN: surface normal

## Claims

1. A sample preparation system (1) comprising a surface selection module (1a) for identifying one or more preparation discs (2) having a preparation surface (2_ps) for materialographic sample preparation,
the surface selection module (1a) comprises a support system (3) having three or more shelves (3a), such as five or more shelves (3a), each arranged to support a preparation disc (2) having a preparation surface (2_ps),
for each shelf (3a), the surface selection module (1a) comprises a reflecting surface (8) arranged to direct electromagnetic waves reflected from a characteristic identification mark (6) of the preparation disc (2) to a sensing position (7) located external to the support system (3),
the surface selection module (1a) further comprises
- an optical sensor (5) arranged to sense the characteristic identification mark (6) in the sensing position (7) and to provide an identification output accordingly,
the sample preparation system (1) further comprises
- a mechanical processing unit (15) comprising a support arrangement (16) with a plane support surface (16a) on which the preparation discs (2) may be held in place during sample preparation by means of a fixation arrangement,
- a transfer unit (11) for transferring a preparation disc (2) having a preparation surface (2_ps) from the support system (3) to the plane support surface (16a) of the mechanical processing unit (15), and
- a control unit (9) arranged to control the transfer unit (11) in response to the identification output.

2. The sample preparation system (1) according to claim 1, wherein the control unit (9) is arranged, from the identification output, to be able to distinguish between preparation discs (2) of different preparation disc types.

3. A sample preparation system (1) according to any of the claims 1-2, wherein the control unit (9) is arranged to control from which shelf (3a) the transfer unit (11) transfers a preparation disc (2) from, based on said identification output.

4. The sample preparation system (1) according to any of the preceding claims, wherein the support system (3) comprises a plurality of shelves (3a) arranged in a stacked configuration.

5. The sample preparation system (1) according to claim 4, wherein the shelves (3a) are arranged, so that when each shelf (3a) contains a preparation disc (2), the distance (D) between neighbouring preparation discs (2) is less than 85 mm, such as less than 75 mm, or such as less than 65 mm.

6. The sample preparation system (1) according to any of the preceding claims, wherein the characteristic identification mark (6) is an image provided at a surface of the preparation disc (2_ps), such as 2-dimensional (2D) code.

7. The sample preparation system (1) according to any of the preceding claims, wherein the characteristic identification mark (6) protrudes less than 0.2 mm, such as less than 0.1 mm from a surface of the preparation disc (2) at which the characteristic identification mark is provided.

8. The sample preparation system (1) according to any of the preceding claims, wherein the characteristic identification mark (6) is provided on a back surface of the preparation disc (2) opposite to the preparation surface (2_ps) thereof.

9. The sample preparation system (1) according to any of the preceding claims, wherein the optical sensor (5) is an image sensor.

10. The sample preparation system (1) according to any of the preceding claims, further comprising a light source arranged to illuminate the characteristic identification mark (6), when a preparation disc (2) is supported by said support system (3).

11. The sample preparation system (1) according to any of the preceding claims, wherein said fixation arrangement includes magnetic means in the support arrangement (16) as well as in the preparation discs (2), and wherein the preparation discs (2) are held in place on the plane support surface (16a) due to mutual magnetic attraction between the support arrangement (16) and the preparation discs (2).

12. The sample preparation system (1) according to any of the preceding claims, wherein said fixation arrangement includes suction means arranged to provide a low pressure region in contact with the preparation disc (2) and wherein the preparation disc (2) is held in place on the plane support surface (16a) due to the low pressure region.

13. The sample preparation system (1) according to any of the preceding claims, wherein the reflecting surface (8) is attached to said support system (3) and arranged above or below said preparation disc (2) when supported by said support system (3).

14. The sample preparation system (1) according to any of the preceding claims, wherein the reflecting surface (8) is arranged to provide an angle of reflection (α_r) of the electromagnetic waves between 40-85 degrees, such as between 50-80 degrees or such as between 60-70 degrees.

15. The sample preparation system (1) according to any of the preceding claims, comprising a displacement system (4) arranged to provide a mutual displacement between the optical sensor (5) and the support system (3).

16. A method of identifying one or more preparation discs (2) for materialographic sample preparation, wherein the method comprises the steps of
- providing a support system (3) having three or more shelves and one or more preparation discs (2) each comprising a preparation surface (2_ps), wherein the preparation discs (2) are distributed into said shelves (3a),
- providing an optical sensor (5) in a sensing position (7), wherein the sensing position (7) is provided with electromagnetic waves from a characteristic identification mark (6) of one of the preparation discs, by reflecting the electromagnetic waves using a reflecting surface (8),
- detecting the characteristic identification mark (6) by the optical sensor (5) and providing an identification output accordingly, wherein the identification output contain data on the identified preparation disc (2) and its associated shelf (3a),
- controlling a selection of a preparation disc (2) by a transfer unit (11) controlled by a control unit (9) based on said identification output, and
- placing the selected preparation disc (2) in a mechanical processing unit mechanical processing unit (15) using said transfer unit (11).

## Patentansprüche

1. Probenvorbereitungssystem (1), umfassend ein Flächenauswahlmodul (1a) zum Identifizieren einer oder mehrerer Vorbereitungsplatten (2), die eine Vorbereitungsfläche (2_ps) zur materialografischen Probenvorbereitung aufweisen,
wobei das Flächenauswahlmodul (1a) ein Stützsystem (3) umfasst, das drei oder mehr Regale (3a), wie etwa fünf oder mehr Regale (3a), aufweist, wobei jedes dazu angeordnet ist, eine Vorbereitungsplatte (2) zu stützen, die eine Vorbereitungsfläche (2_ps) aufweist,
wobei für jedes Regal (3a) das Flächenauswahlmodul (1a) eine Reflexionsfläche (8) umfasst, die dazu angeordnet ist, elektromagnetische Wellen, die von einer charakteristischen Identifizierungsmarkierung (6) der Vorbereitungsplatte (2) reflektiert werden, zu einer Erfassungsposition (7) zu lenken, die sich außerhalb des Stützsystems (3) befindet,
wobei das Flächenauswahlmodul (1a) ferner Folgendes umfasst:
- einen optischen Sensor (5), der dazu angeordnet ist, die charakteristische Identifizierungsmarkierung (6) in der Erfassungsposition (7) zu erfassen und dementsprechend eine Identifizierungsausgabe bereitzustellen,
wobei das Probenvorbereitungssystem (1) ferner Folgendes umfasst:
- eine mechanische Verarbeitungseinheit (15), die eine Stützanordnung (16) mit einer ebenen Stützfläche (16a) umfasst, auf der die Vorbereitungsplatten (2) während der Probenvorbereitung mittels einer Fixierungsanordnung an Ort und Stelle gehalten werden können,
- eine Transfereinheit (11) zum Transferieren einer Vorbereitungsplatte (2), die eine Vorbereitungsfläche (2_ps) aufweist, von dem Stützsystem (3) zu der ebenen Stützfläche (16a) der mechanischen Verarbeitungseinheit (15) zu transferieren, und
- eine Steuereinheit (9), die dazu angeordnet ist, die Transfereinheit (11) als Reaktion auf die Identifizierungsausgabe zu steuern.

2. Probenvorbereitungssystem (1) nach Anspruch 1, wobei die Steuereinheit (9) dazu angeordnet ist, anhand der Identifizierungsausgabe in der Lage zu sein, zwischen Vorbereitungsplatten (2) von unterschiedlichen Vorbereitungsplattentypen zu unterscheiden.

3. Probenvorbereitungssystem (1) nach einem der Ansprüche 1-2, wobei die Steuereinheit (9) dazu angeordnet ist, basierend auf der Identifizierungsausgabe zu steuern, von welchem Regal (3a) die Transfereinheit (11) eine Vorbereitungsplatte (2) transferiert.

4. Probenvorbereitungssystem (1) nach einem der vorhergehenden Ansprüche, wobei das Stützsystem (3) eine Vielzahl von Regalen (3a) umfasst, die in einer gestapelten Konfiguration angeordnet sind.

5. Probenvorbereitungssystem (1) nach Anspruch 4, wobei die Regale (3a) so angeordnet sind, dass, wenn jedes Regal (3a) eine Vorbereitungsplatte (2) enthält, der Abstand (D) zwischen benachbarten Vorbereitungsplatten (2) weniger als 85 mm beträgt, wie etwa weniger als 75 mm oder weniger als 65 mm.

6. Probenvorbereitungssystem (1) nach einem der vorhergehenden Ansprüche, wobei die charakteristische Identifizierungsmarkierung (6) ein Bild ist, das an einer Fläche der Vorbereitungsplatte (2_ps) bereitgestellt wird, wie etwa ein 2-dimensionaler Code (2D-Code).

7. Probenvorbereitungssystem (1) nach einem der vorhergehenden Ansprüche, wobei die charakteristische Identifizierungsmarkierung (6) weniger als 0,2 mm, wie etwa weniger als 0,1 mm, von einer Fläche der Vorbereitungsplatte (2) hervorsteht, an der die charakteristische Identifizierungsmarkierung bereitgestellt ist.

8. Probenvorbereitungssystem (1) nach einem der vorhergehenden Ansprüche, wobei die charakteristische Identifizierungsmarkierung (6) an einer Rückfläche der Vorbereitungsplatte (2) gegenüber der Vorbereitungsfläche (2_ps) davon bereitgestellt ist.

9. Probenvorbereitungssystem (1) nach einem der vorhergehenden Ansprüche, wobei der optische Sensor (5) ein Bildsensor ist.

10. Probenvorbereitungssystem (1) nach einem der vorhergehenden Ansprüche, ferner umfassend eine Lichtquelle, die dazu angeordnet ist, die charakteristische Identifizierungsmarkierung (6) zu beleuchten, wenn eine Vorbereitungsplatte (2) durch das Stützsystem (3) gestützt wird.

11. Probenvorbereitungssystem (1) nach einem der vorhergehenden Ansprüche, wobei die Fixierungsanordnung magnetische Mittel in der Stützanordnung (16) sowie in den Vorbereitungsplatten (2) beinhaltet und wobei die Vorbereitungsplatten (2) auf der ebenen Stützfläche (16a) aufgrund einer gegenseitigen magnetischen Anziehung zwischen der Stützanordnung (16) und den Vorbereitungsplatten (2) an Ort und Stelle gehalten werden.

12. Probenvorbereitungssystem (1) nach einem der vorhergehenden Ansprüche, wobei die Fixierungsanordnung Saugmittel beinhaltet, die dazu angeordnet sind, einen Niederdruckbereich in Kontakt mit der Vorbereitungsplatte (2) bereitzustellen, und wobei die Vorbereitungsplatte (2) auf der ebenen Stützfläche (16a) aufgrund des Niederdruckbereiches an Ort und Stelle gehalten wird.

13. Probenvorbereitungssystem (1) nach einem der vorhergehenden Ansprüche, wobei die Reflexionsfläche (8) an dem Stützsystem (3) angebracht und über oder unter der Vorbereitungsplatte (2) angeordnet ist, wenn diese durch das Stützsystem (3) gestützt wird.

14. Probenvorbereitungssystem (1) nach einem der vorhergehenden Ansprüche, wobei die Reflexionsfläche (8) dazu angeordnet ist, einen Reflexionswinkel (α_r) der elektromagnetischen Wellen zwischen 40-85 Grad bereitzustellen, wie etwa zwischen 50-80 Grad oder wie etwa zwischen 60-70 Grad.

15. Probenvorbereitungssystem (1) nach einem der vorhergehenden Ansprüche, umfassend ein Verschiebungssystem (4), das dazu angeordnet ist, eine gegenseitige Verschiebung zwischen dem optischen Sensor (5) und dem Stützsystem (3) bereitzustellen.

16. Verfahren zum Identifizieren einer oder mehrerer Vorbereitungsplatten (2) zur materialografischen Probenvorbereitung, wobei das Verfahren die folgenden Schritte umfasst:
- Bereitstellen eines Stützsystems (3), das drei oder mehr Regale und eine oder mehrere Vorbereitungsplatten (2) aufweist, von denen jede eine Vorbereitungsfläche (2_ps) umfasst, wobei die Vorbereitungsplatten (2) in die Regale (3a) verteilt sind,
- Bereitstellen eines optischen Sensors (5) in einer Erfassungsposition (7), wobei der Erfassungsposition (7) elektromagnetische Wellen von einer charakteristischen Identifizierungsmarkierung (6) von einer der Vorbereitungsplatten bereitgestellt werden, indem die elektromagnetischen Wellen unter Verwendung einer Reflexionsfläche (8) reflektiert werden,
- Detektieren der charakteristischen Identifizierungsmarkierung (6) durch den optischen Sensor (5) und entsprechendes Bereitstellen einer Identifizierungsausgabe, wobei die Identifizierungsausgabe Daten zu der identifizierten Vorbereitungsplatte (2) und deren zugeordnetem Regal (3a) enthält,
- Steuern einer Auswahl einer Vorbereitungsplatte (2) durch eine Transfereinheit (11), die durch eine Steuereinheit (9) basierend auf der Identifizierungsausgabe gesteuert wird, und
- Platzieren der ausgewählten Vorbereitungsplatte (2) in einer mechanischen Verarbeitungseinheit, wobei die mechanische Verarbeitungseinheit (15) die Transfereinheit (11) verwendet.

## Revendications

1. Système de préparation d'échantillon (1) comprenant un module de sélection de surface (1a) pour identifier un ou plusieurs disques de préparation (2) ayant une surface de préparation (2_ps) pour la préparation d'échantillons métallographiques,
le module de sélection de surface (1a) comprend un système de support (3) ayant trois étagères (3a) ou plus, telles que cinq étagères (3a) ou plus, chacune agencée pour supporter un disque de préparation (2) ayant une surface de préparation (2_ps),
pour chaque étagère (3a), le module de sélection de surface (1a) comprend une surface réfléchissante (8) agencée pour diriger des ondes électromagnétiques réfléchies à partir d'une marque d'identification caractéristique (6) du disque de préparation (2) vers une position de détection (7) située à l'extérieur du système de support (3),
le module de sélection de surface (1a) comprend en outre
- un capteur optique (5) agencé pour détecter la marque d'identification caractéristique (6) dans la position de détection (7) et pour fournir une sortie d'identification en conséquence,
le système de préparation d'échantillon (1) comprend en outre
- une unité de traitement mécanique (15) comprenant un agencement de support (16) avec une surface de support plane (16a) sur laquelle les disques de préparation (2) peuvent être maintenus en place pendant la préparation d'échantillon au moyen d'un agencement de fixation,
- une unité de transfert (11) pour transférer un disque de préparation (2) ayant une surface de préparation (2_ps) à partir du système de support (3) vers la surface de support plane (16a) de l'unité de traitement mécanique (15), et
- une unité de commande (9) agencée pour commander l'unité de transfert (11) en réponse à la sortie d'identification.

2. Système de préparation d'échantillon (1) selon la revendication 1, dans lequel l'unité de commande (9) est agencée, à partir de la sortie d'identification, pour être capable de distinguer entre des disques de préparation (2) de différents types de disques de préparation.

3. Système de préparation d'échantillon (1) selon l'une quelconque des revendications 1 à 2, dans lequel l'unité de commande (9) est agencée pour commander à partir de quelle étagère (3a) l'unité de transfert (11) transfère un disque de préparation (2), sur la base de ladite sortie d'identification.

4. Système de préparation d'échantillon (1) selon l'une quelconque des revendications précédentes, dans lequel le système de support (3) comprend une pluralité d'étagères (3a) agencées dans une configuration empilée.

5. Système de préparation d'échantillon (1) selon la revendication 4, dans lequel les étagères (3a) sont agencées de sorte que, lorsque chaque étagère (3a) contient un disque de préparation (2), la distance (D) entre des disques de préparation (2) voisins est inférieure à 85 mm, telle qu'inférieure à 75 mm, ou telle qu'inférieure à 65 mm.

6. Système de préparation d'échantillon (1) selon l'une quelconque des revendications précédentes, dans lequel la marque d'identification caractéristique (6) est une image prévue au niveau d'une surface du disque de préparation (2_ps), telle qu'un code bidimensionnel (2D).

7. Système de préparation d'échantillon (1) selon l'une quelconque des revendications précédentes, dans lequel la marque d'identification caractéristique (6) fait saillie de moins de 0,2 mm, tel que moins de 0,1 mm, par rapport à une surface du disque de préparation (2) au niveau de laquelle la marque d'identification caractéristique est prévue.

8. Système de préparation d'échantillon (1) selon l'une quelconque des revendications précédentes, dans lequel la marque d'identification caractéristique (6) est prévue sur une surface arrière du disque de préparation (2) opposée à la surface de préparation (2_ps) de celui-ci.

9. Système de préparation d'échantillon (1) selon l'une quelconque des revendications précédentes, dans lequel le capteur optique (5) est un capteur d'image.

10. Système de préparation d'échantillon (1) selon l'une quelconque des revendications précédentes, comprenant en outre une source de lumière agencée pour éclairer la marque d'identification caractéristique (6), lorsqu'un disque de préparation (2) est supporté par ledit système de support (3).

11. Système de préparation d'échantillon (1) selon l'une quelconque des revendications précédentes, dans lequel ledit agencement de fixation inclut des moyens magnétiques dans l'agencement de support (16) ainsi que dans les disques de préparation (2), et dans lequel les disques de préparation (2) sont maintenus en place sur la surface de support plane (16a) en raison d'une attraction magnétique mutuelle entre l'agencement de support (16) et les disques de préparation (2).

12. Système de préparation d'échantillon (1) selon l'une quelconque des revendications précédentes, dans lequel ledit agencement de fixation inclut des moyens d'aspiration agencés pour fournir une région de basse pression en contact avec le disque de préparation (2) et dans lequel le disque de préparation (2) est maintenu en place sur la surface de support plane (16a) en raison de la région de basse pression.

13. Système de préparation d'échantillon (1) selon l'une quelconque des revendications précédentes, dans lequel la surface réfléchissante (8) est fixée audit système de support (3) et agencée au-dessus ou en dessous dudit disque de préparation (2) lorsqu'il est supporté par ledit système de support (3).

14. Système de préparation d'échantillon (1) selon l'une quelconque des revendications précédentes, dans lequel la surface réfléchissante (8) est agencée pour fournir un angle de réflexion (α_r) des ondes électromagnétiques compris entre 40 et 85 degrés, tel qu'entre 50 et 80 degrés ou tel qu'entre 60 et 70 degrés.

15. Système de préparation d'échantillon (1) selon l'une quelconque des revendications précédentes, comprenant un système de déplacement (4) agencé pour fournir un déplacement mutuel entre le capteur optique (5) et le système de support (3).

16. Procédé d'identification d'un ou plusieurs disques de préparation (2) pour la préparation d'échantillons métallographiques, le procédé comprenant les étapes consistant à :
- fournir un système de support (3) ayant trois étagères ou plus et un ou plusieurs disques de préparation (2) comprenant chacun une surface de préparation (2_ps), dans lequel les disques de préparation (2) sont répartis dans lesdites étagères (3a),
- fournir un capteur optique (5) dans une position de détection (7), dans lequel la position de détection (7) reçoit des ondes électromagnétiques provenant d'une marque d'identification caractéristique (6) de l'un des disques de préparation, en réfléchissant les ondes électromagnétiques à l'aide d'une surface réfléchissante (8),
- détecter la marque d'identification caractéristique (6) par le capteur optique (5) et fournir une sortie d'identification en conséquence, dans lequel la sortie d'identification contient des données sur le disque de préparation (2) identifié et son étagère (3a) associée,
- commander une sélection d'un disque de préparation (2) par une unité de transfert (11) commandée par une unité de commande (9) sur la base de ladite sortie d'identification, et
- placer le disque de préparation (2) sélectionné dans une unité de traitement mécanique (15) à l'aide de ladite unité de transfert (11).
